# EUROPÄISCHE PATENTANMELDUNG

(11) **EP 3 306 185 A1**
(43) Veröffentlichungstag der Anmeldung: **11.04.2018**
(21) Anmeldenummer: 16193156.3
(22) Anmeldetag: 10.10.2016
(51) Int. Cl.: F21V 17/16, F21V 17/18, F21V 21/03, F21V 23/06, H01R 13/627, H02G 3/20

(54) **LEUCHTE**

(71) Anmelder: Wimmer, Matthäus, 5205 Schleedorf (AT); Rottner, Heinz, 4880 St. Georgen/A. (AT)
(72) Erfinder: Wimmer, Matthäus, 5205 Schleedorf (AT); Rottner, Heinz, 4880 St. Georgen/A. (AT)
(74) Vertreter: Jell, Friedrich

(57) **Zusammenfassung**

Es wird eine Leuchte mit einem zum Befestigen der Leuchte (1), beispielsweise an einer Gebäudestruktur (3), vorgesehenen Montageteil (2) gezeigt, das einen Vorsprung (4) aufweist, mit einem zum Tragen mindestens einer Lampe (10) vorgesehenen Kupplungsteil (5.1, 5.2), welches eine zum Einsetzen des Vorsprungs (4) ausgebildete Aufnahme (6) aufweist, und mit mindestens einer zwischen Vorsprung (4) und Aufnahme (6) vorgesehen, lösbaren Schnappverbindung (7), welcher eine Rastaussparung (9) am Außenmantel des Vorsprungs (4) sowie ein mit der Rastaussparung (9) verschnappbares Schnappelement (8.1, 8.2, 8.3, 8.4) zugehört, das am Kupplungsteil (5.1, 5.2) gelagert ist. Um diese besonders standfest und kompakt auszubilden, wird vorgeschlagen, dass das Schnappelement (8.1, 8.2, 8.3, 8.4) einen am Kupplungsteil (5.1, 5.2) zumindest einseitig eingespannten Biegebalken (11) und einen am Biegebalken (11) vorgesehenen Rastkopf (12) aufweist, welcher Rastkopf (12) in die Aufnahme (6) einragt und mit der Rastaussparung (9) verschnappbar ausgebildet ist.

## Beschreibung

Die Erfindung betrifft eine Leuchte mit einem zum Befestigen der Leuchte, beispielsweise an einer Gebäudestruktur, vorgesehenen Montageteil, das einen Vorsprung aufweist, mit einem zum Tragen mindestens einer Lampe vorgesehenen Kupplungsteil, welches eine zum Einsetzen des Vorsprungs ausgebildete Aufnahme aufweist, und mit mindestens einer zwischen Vorsprung und Aufnahme vorgesehen, lösbaren Schnappverbindung, welcher eine Rastaussparung am Außenmantel des Vorsprungs sowie ein mit der Rastaussparung verschnappbares Schnappelement zugehört, das am Kupplungsteil gelagert ist.

Leuchten mit einem zum Befestigen der Leuchte, beispielsweise an einer Gebäudestruktur, vorgesehenen Montageteil, das einen Vorsprung sowie einen zum Tragen mindestens einer Lampe vorgesehenen Kupplungsteil aufweist, das eine zum Einsetzen des zapfenförmigen Vorsprungs ausgebildete Aufnahme umfasst sind aus dem Stand der Technik bekannt. Bei diesen ist mindestens eine zwischen Vorsprung und Aufnahme vorgesehene, lösbaren Schnappverbindung vorgesehen, welcher eine Rastaussparung am Außenmantel des Vorsprungs sowie ein mit der Rastaussparung verschnappbares Schnappelement zugehört, welches Schnappelement am Kupplungsteil gelagert ist.

Zweiteilige Leuchten mit einem Montageteil und mit einem Kupplungsteil, das mit dem zur Befestigung an einer Gebäudestruktur vorgesehenen Montageteil lösbar verbunden werden kann, sind beispielsweise aus der (EP2963342A1) bekannt. Die lösbare Verbindung wird von einer Schnappverbindung ausgebildet, welche zwischen einem Vorsprung des Montageteils und einer zum Einsetzen des Vorsprungs ausgebildeten Aufnahme vorgesehen ist. Hierzu weist die Schnappverbindung am Außenmantel des Vorsprungs eine Rastaussparung und ein Schnappelement bzw. eine Raststange am Kupplungsteil auf, welches Schnappelement mit der Rastaussparung verschnappt und in Ausrastrichtung von der Rastaussparung gelöst werden kann, indem ein axial am Kupplungsteil verschiebbar gelagertes Betätigungsteil bewegt wird.
Zwar kann mit einer Schnappverbindung, die eine Rastaussparung am Mantel des zapfenförmigen Vorsprungs aufweist, eine mechanisch robuste und dennoch lösbare Verbindung geschaffen werden, welche auch vergleichsweise einfach zu bedienen ist - der Mechanismus zum Lösen der Schnappverbindung bedarf jedoch eines hohen konstruktiven Aufwands. Dies insbesondere aufgrund des verschiebbar am Kupplungsteil gelagerten Betätigungsteils und der damit verbundenen erhöhten Anzahl an Baugruppen am Kupplungsteil. Zudem fordert solch ein Mechanismus zum Lösen der Schnappverbindung an der Leuchte vergleichsweise große Abmessungen.

Es ist daher die Aufgabe der Erfindung, eine Leuchte mit einer lösbaren Schnappverbindung zwischen Leuchtenteilen ausgehend vom eingangs geschilderten Stand der Technik derart konstruktiv zu verändern, dass trotz schlanker Bauform eine standfeste, lösbare Verbindung sichergestellt werden kann. Zudem soll die Lampe konstruktiv einfach ausgebildet sein.

Die Erfindung löst die gestellte Aufgabe dadurch, dass das Schnappelement einen am Kupplungsteil zumindest einseitig eingespannten Biegebalken und einen am Biegebalken vorgesehenen Rastkopf aufweist, welcher Rastkopf in die Aufnahme einragt und mit der Rastaussparung verschnappbar ausgebildet ist.

Weist das Schnappelement einen am Kupplungsteil zumindest einseitig eingespannten Biegebalken und einen am Biegebalken vorgesehenen Rastkopf auf, welcher Rastkopf in die Aufnahme einragt und mit der Rastaussparung verschnappbar ausgebildet ist, kann der Konstruktionsaufwand am Kupplungsteil trotz lösbarer Funktion des Schnappelements gering gehalten werden - dies unter anderem dadurch, dass auf Führungen zum Entriegeln/Verriegeln der Schnappverbindung verzichtet werden kann. Zudem ist es möglich, sich die Konstruktion des Kupplungsteils durch das zumindest einseitige Einspannen des Schnappelements weiter zu vereinfachen und kompakte Bauverhältnisse zu gewährleisten. Erfindungsgemäß kann dies daher nicht nur zu einer standfesten, sondern auch in Bauform besonders schlanken Leuchte führen.

Die Fügekraft der lösbaren Schnappverbindung zwischen Montageteil und Kupplungsteil kann weiter erhöht werden, wenn der Biegebalken beidseitig im Kupplungsteil eingespannt ist. Des Weiteren kann solch eine beidseitige Einspannung des Biegebalkens dessen Belastungen vermindern - und in weiterer Folge die Standfestigkeit des Schnappelements verbessern.

Ist der Rastkopf mittig am Biegebalken vorgesehen, kann beim Betätigen der Schnappverbindung eine weitgehend gleichmäßige Verformung des Biegebalkens gewährleistet werden - was der Standfestigkeit der Leuchte dienlich ist.

Weist der Rastkopf eine zumindest abschnittsweise gekrümmte Rastfläche auf, kann damit nicht nur eine axiale Verbindung zwischen Montageteil und Kupplungsteil geschaffen, sondern auch deren Drehstellung fixiert werden. Dadurch ist es möglich, die Handhabung der Leuchte weiter zu vereinfachen.

Konstruktiv einfach gelöst, kann die Drehstellung des Montageteils zum Kupplungsteil fixiert werden, indem der Rastkopf eine verzahnte Rastfläche aufweist.

Im Allgemeinen wird festgehalten, dass die Fixierung der Drehstellung des Montageteils zum Kupplungsteil zudem konstruktiv einfach erreicht werden kann, wenn der Rastkopf eine gerillte, geriffelte, geprägte und/oder beschichtete Rastfläche aufweist. Eine solche haftungserhöhende Oberflächenstruktur kann die Drehstellung besonders vorteilhaft fixieren.
Im Allgemeinen wird weiter festgehalten, dass die Rastfläche eine Beschichtung zur Erhöhung der Haftreibung zwischen Montageteil und Rastkopf aufweisen kann.

Die Fügekraft mittels Schnappelement bzw. die mechanische Belastbarkeit der Schnappverbindung können - auf konstruktiv einfache Weise gelöst - erhöht werden, wenn mehrere Schnappelemente am Kupplungsteil gelagert sind. Liegen sich diese Schnappelemente an der Aufnahme diametral gegenüber, kann dies unter anderem Fertigungstoleranzen ausgleichen - und damit die Standfestigkeit der Schnappverbindung bzw. damit auch der Leuchte verbessen.

Weist die Leuchte ein in eine Arretierstellung bewegbar ausgebildetes Arretiermittel auf, welches das mit der Rastaussparung verschnappte Schnappelement in Ausrastrichtung arretiert, kann unabhängig von der Fügekraft des Schnappelements eine belastbare formschlüssige Verbindung zwischen Montage- und Kupplungsteil sichergestellt werden. Das Arretiermittel kann nämlich eine Bewegung des Schnappelements in Ausrastrichtung verhindern, wodurch auch bei, die Fügekraft des Schnappelements übersteigenden Gewichtsbelastungen auf das Kupplungsteil eine Zusammenhalt der Leuchtenteile gegeben bleibt - was zu einer vergleichsweise hohen Standfestigkeit der Leuchte führen kann. Zudem bedarf es aufgrund des Arretiermittels auch keines zusätzlichen Aufwands am Schnappelement bzw. an der Schnappverbindung, wodurch die Konstruktion an der Leuchte einfach bleiben kann, um deren schlanke Bauform sicherzustellen.

Die Konstruktion der Leuchte kann weiter vereinfacht werden, wenn das Arretiermittel im Kupplungsteil beweglich gelagert ist. Zudem kann dies die Handhabung der Leichte aufgrund reduzierter Baugruppen erleichtern.

Ist zwischen Arretiermittel und Kupplungsteil eine Linear- oder Rundführung vorgesehen, kann die Handhabung des Arretiermittels erleichtert werden.

Vergleichsweise hohen Zugbelastungen, etwa aufgrund des Gewichts der Lampe kann die formschlüssige Schnappverbindung standhalten, wenn das Arretiermittel beim Arretieren des Schnappelements am Biegebalken rückseitig zum Rastkopf anliegt. Über das Arretiermittel kann nämlich damit unabhängig von der, vom Schnappelement aufgebrachten Fügekraft eine Bewegung des Schnappelements in Ausrastrichtung verhindert werden.

Die mechanische Belastbarkeit und Zuverlässigkeit der Arretierung der Schnappverbindung können erhöht werden, wenn das Arretiermittel zwei diametral gegenüberliegende Schnappelemente in der jeweiligen Ausrastrichtung arretiert.

Die Handhabung der Leuchte bei Montage und Wartung kann weiter erleichtert werden, wenn der Vorsprung im Bereich der Rastaussparung rotationsymmetrisch ausgebildet ist. Derart kann das Schnappelement am Kupplungsteil nämlich mit der Rastaussparung unabhängig von seiner Drehlage gegenüber dem Montageteil verschnappt werden.

Um eine besonders starke Verbindung, die in ihrer Drehlage zudem festgestellt ist zu erreichen, kann vorgesehen sein, dass die Rastaussparung eine Außenverzahnung aufweist.

Im Allgemeinen wird festgehalten, dass die Drehstellung des Kupplungsteils gegenüber dem Montageteil besonders stark festgestellt werden kann, wenn die Rastaussparung eine im Vergleich zu angrenzenden Flächen in der Haftreibung erhöhte Haftfläche aufweist.
Im Allgemeinen wird zudem festgehalten, dass die Haftung zwischen Rastkopf und Rastaussparung konstruktiv einfach erhöht werden kann, wenn die Haftfläche in der Rastaussparung eine Gummierung aufweist.
Im Allgemeinen wird weiter festgehalten, dass die Haftung zwischen Rastkopf und Rastaussparung konstruktiv einfach erhöht werden kann, wenn die Haftfläche eine gerillte, geriffelte oder geprägte Oberfläche aufweist.
Im Allgemeinen wird weiter festgehalten, dass die Haftfläche eine Beschichtung zur Erhöhung der Haftreibung zwischen Haftfläche und Rastkopf aufweisen kann.

Die elektrische Installation der Leuchte kann sich erleichtern, wenn zwischen Vorsprung und Aufnahme eine elektrische Verbindung über elektrische Kontakte am Montageteil und Kupplungsteil vorgesehen ist.

Sind ein erster elektrischer Kontakt in einer Öffnung des zapfenförmig ausgebildeten Vorsprungs und ein mit dem ersten elektrischen Kontakt verbindbarer, zweiter elektrischer Kontakt in der Ausnehmung am Kupplungsteil vorgesehen, können elektrische Kurzschlüsse auf elegante Weise vermeiden. Die Handhabung der Leuchte bei der Montage oder Wartung sich damit weiter erleichtert.

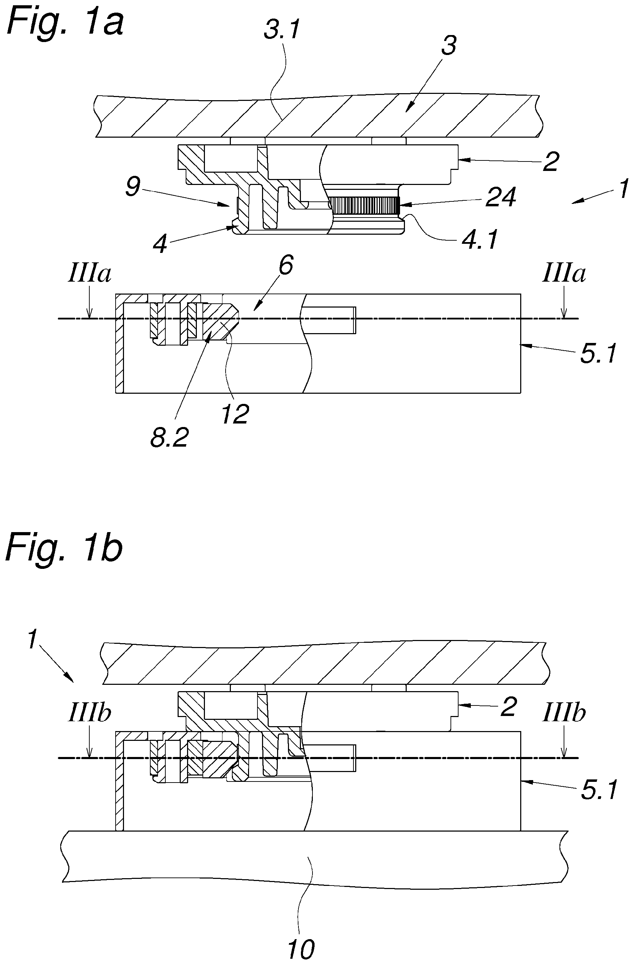

In den Figuren ist beispielsweise der Erfindungsgegenstand anhand mehrerer Ausführungsvarianten näher dargestellt. Es zeigen
- Fig. 1a: eine teilweise aufgerissene Seitansicht auf eine Leuchte mit voneinander getrenntem Montage- und Kupplungsteil,
- Fig. 1 b: eine teilweise aufgerissene Seitansicht auf die Leuchte nach Fig. 1 mit verschnapptem Montage- und Kupplungsteil,
- Fig. 2: eine Detailansicht der Fig. 1b auf die Schnappverbindung,
- Fig. 3, 3a: eine Schnittansicht nach II-II der Fig. 1a und
- Fig. 4, 4a: eine Schnittansicht eines Montageteils nach einem zweiten Ausführungsbeispiel.

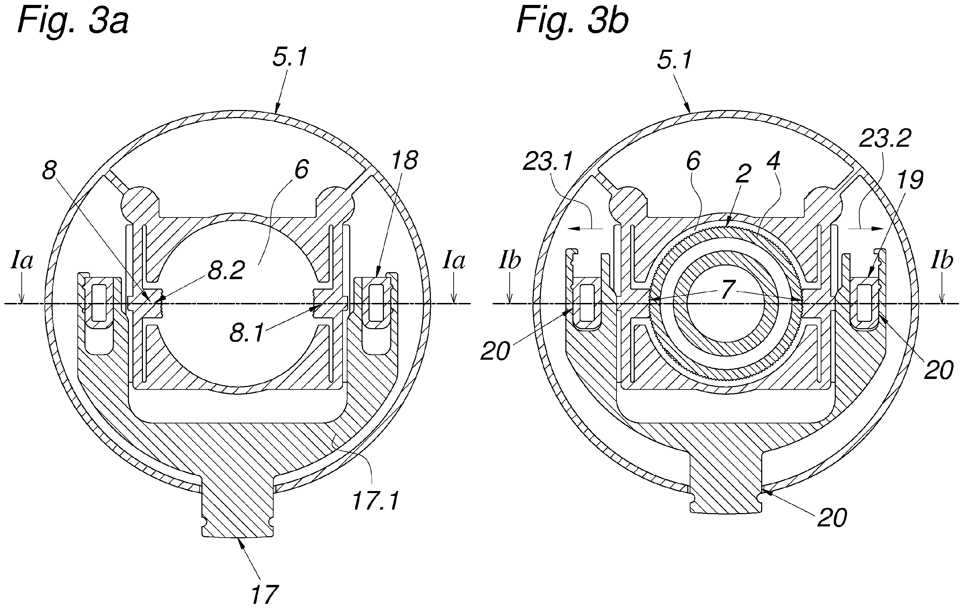

Gemäß den Figuren 1a und 1b wird beispielsweise eine mehrteilige Leuchte 1 nach einer ersten Ausführungsvariante näher dargestellt. Dieser Leuchte 1 gehört ein Montageteil 2 zu, das an einer Decke 3.1 einer Gebäudestruktur 3 befestigt, insbesondere angeschraubt, ist. Das Montageteil 2 bildet einen Vorsprung 4 elegante Weise - etwa in Form einer Hülse oder eines Zapfens - aus, der zur Verbindung mit einem Kupplungsteil 5.1 der Leuchte 1 dient. So ist am Kupplungsteil 5.1 eine komplementäre Aufnahme 6 vorgesehen, die zum Einsetzen dieses Vorsprungs 4 des Montageteils 2 ausgebildet ist. Für eine mechanische Verbindung zwischen Montageteil 2 und Kupplungsteil 5 sorgt eine zwischen Vorsprung 4 und Aufnahme 6 vorgesehene, lösbare Schnappverbindung 7 - siehe zu dieser Fig. 3b. An das Kupplungsteil 5.1 der Leuchte 1 schließen weitere Teile der Leuchte an, von denen - wie in Fig. 1 zu erkennen - eine LED-Lampe 10 dargestellt worden ist. Bei vergleichsweise großen an das Kupplungsteil 5 anschließenden Leuchtenteilen kann es zu einer erschwerten Handhabung der Schnappverbindung 7 kommen, insbesondere wenn diese geöffnet werden muss und - wie im Stand der Technik gegeben - es einer Betätigung am Kupplungsteil 5 bedarf.

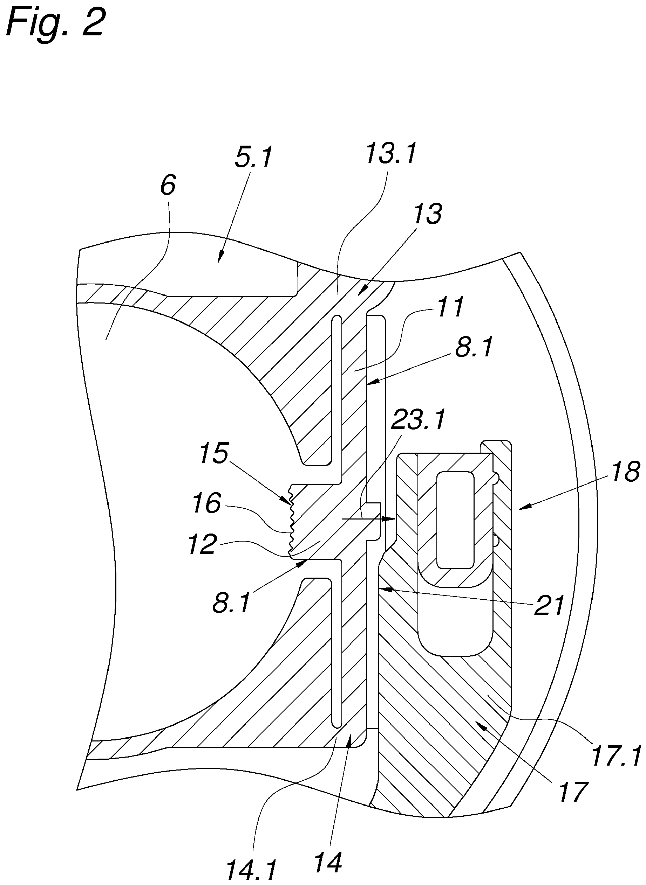

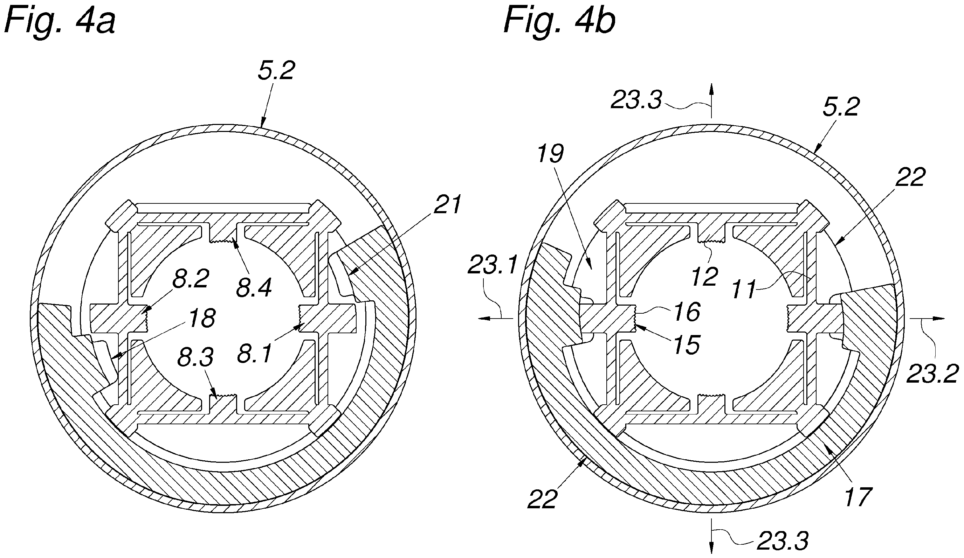

Die Schnappverbindung 7 bildet sich durch Verschnappen mehrerer am Kupplungsteil 5 gelagerte Schnappelemente - 8.1, 8.2 nach Figur 3a sowie 8.1, 8.2, 8.3, 8.4 nach Figur 4a - mit einer Rastaussparung 9 aus. Die Rastaussparung 9 befindet sich am Außenmantel 4.1 des Vorsprungs 4. Um die Handhabung der Schnappverbindung 7 zu erleichtern, schlägt die Erfindung ein besonders konstruiertes Schnappelement 8.1, 8.2, 8.3, 8.4 vor. Insbesondere anhand der Fig. 2 bzw. den folgenden ist erkennbar, dass das erfindungsgemäße Schnappelement 8.1, 8.2, 8.3, 8.4 einen am Kupplungsteil 5 beidseitig eingespannten geraden Biegebalken 11 und einen am Biegebalken 11 mittig vorgesehenen Rastkopf 12 aufweist. Der Rastkopf 12 ragt in die Aufnahme 6 ein und verschnappt daher beim lösbaren Zusammenfügen von Montageteil 2 und Kupplungsteil 5.1, 5.2 mit der Rastaussparung 9, wobei gegen die Fügekraft des Rastkopfs 12 die Schnappverbindung 7 geöffnet werden kann. Eine einfach handzuhabende Leuchte 1 ist damit gegeben.

Die beiden gegenüberliegenden Festlager 13, 14 zum beidseitigen Einspannen des Biegebalkens 11 werden von Stegen 13.1, 14.1 des Kupplungsteils 5.1 bzw. 5.2 ausgebildet - was die Konstruktion der Leuchte 1 weiter vereinfacht. Der Rastkopf 12 ist endseitig an der Rastfläche 15 gekrümmt. Damit kann die Flächenpressung zwischen den Schnappelementen 8.1, 8.2, 8.3, 8.4 und dem Vorsprung 4 des Montageteils 2 erhöht werden, was der Standfestigkeit der Schnappverbindung 7 förderlich ist. Zudem wird damit das Kupplungsteil 5.1, 5.2 in seiner Drehlage zum Montageteil 2 gesichert. Letzteres wird auch durch die Verzahnung 16 an der Rastfläche 15 erhöht.

Unter anderem, um die lösbaren Schnappverbindung 7 auch für höhere Gewichtsbelastungen standfest auszubilden, weist die Leuchte 1 ein Arretiermittel 17 auf, das von einer Offenstellung 18 - siehe Fig. 2, 3a, 4a - ein eine Arretierstellung 19 - siehe Fig. 3b 4b - bewegbar ist. In der Arretierstellung 19 arretiert das Arretiermittel 17 das mit der Rastaussparung 9 verschnappte Schnappelement 8.1, 8.2, 8.3, 8.4, wodurch unabhängig von der Fügekraft/Haltekraft des Schnappelements 8.1, 8.2, 8.3, 8.4 die lösbare Schnappverbindung 7 festgestellt ist. Erfindungsgemäß wird so eine hohen Gewichtsbelastungen standhaltende Schnappverbindung 7 zur Verfügung gestellt - die Problematik bezüglich mechanischer Belastbarkeit der Schnappverbindung 7 tritt durch die Arretier-Funktion am Montageteil 2 also in den Hintergrund. Dies erhöht die Gestaltungsfreiheit am Kupplungsteil 5, welchem die Schnappverbindung 7 zugehört, und ermöglicht eine in den Außenabmessungen schlank ausgeführte Leuchte 1.

Das Arretiermittel 17 ist im Kupplungsteil 5 beweglich gelagert. Hierfür ist zwischen Arretiermittel 17 und Kupplungsteil 5 eine Linearführung 20 vorgesehen, wie diese in Fig. 2a und 2b zu erkennen ist. Das Arretiermittel 17 ist in diesem Ausführungsbeispiel als Schieber 17.1 realisiert, welcher beim Arretieren des Schnappelements 8.1, 8.2, 8.3, 8.4 am Biegebalken 11 mit einem Anschlag 21 anliegt, und zwar am Biegebalken 11 rückseitig zum Rastkopf 12 - also auf der Seite des Biegebalkens 11, welche jener, die den Rastkopf 12 ausbildet gegenüberliegt. Dadurch wird ein Biegen des Biegenbalkens 11 nach außen - und somit ein unerwünschtes Lösen der Verbindung zwischen Montageteil 2 und Kupplungsteil 5.1 verhindert.

Auch ist eine Rundführung 22 im Kupplungsteil 5.2 für das Arretiermittel 17 vorstellbar, wie dies in den Figuren 3a und 3b in einer weiteren Ausführungsvariante näher dargestellt ist. Dieser rundgeführte Schieber 17 weist einen Anschlag 21 auf, mit dem die Durchbiegung des beidseitig eingespannten Biegebalkens 11 der Schnappverbindung 7 gesperrt bzw. das Schnappelement 8.1, 8.2, 8.3, 8.4 in Ausrastrichtung 23 arretiert werden kann.

Wie in Fig. 3 zu erkennen, weist das Kupplungsteil 5.1 zwei an der Aufnahme 6 diametral gegenüberliegende Schnappelemente 8.1, 8.2 auf, wohingegen beim Kupplungsteil 5.2 nach Fig. 4a und 4b vier an der Aufnahme 6 diametral gegenüberliegende Schnappelemente 8.1, 8.2 bzw. 8.3, 8.4 dargestellt sind. Die Arretiermittel 17 der Kupplungsteile 5.1, 5.2 arretieren jedoch stets nur zwei an der Aufnahme 6 diametral gegenüberliegende Schnappelemente 8.1, 8.2, was die Konstruktion einfach hält, dennoch aber eine standfeste Schnappverbindung 7 gewährleistet.

Wie insbesondere der Fig. 1 zu entnehmen, ist der Vorsprung 4 an der Rastaussparung 9 rotationsymmetrisch ausgebildet, wodurch unabhängig von der Drehlage des Kupplungsteils 5 die Schnappverbindung 7 die Fügefunktion gewährleisten kann. Diese erleichtert die Handhabung der Leuchte 1 bei der Montage wesentlich. Zudem weist diese Rastaussparung 9 eine Außenverzahnung 24 auf, um die Drehlage des Kupplungsteils 5 zum Montageteil 2 festzustellen, was im Zusammenwirken mit einer Verzahnung 16 an der Rastfläche 15 des Rastkopfs 12 einen besonders belastbare feste Verbindung schafft und zudem eine einfache und exakte Drehausrichtung des Kupplungsteils 5 am Montageteil 2 ermöglicht.

Anstatt der Außenverzahnung 24 kann die Rastaussparung 9 ebenso eine die Haftreibung zwischen Rastkopf 12 und Rastaussparung 9 erhöhende Haftfläche aufweisen, welche in Verbindung mit der Rastfläche 15 des Rastkopfs 12 die Drehlage des Kupplungsteils 5 zum Montageteil 2 zuverlässig feststellen kann, was in den Figuren jedoch nicht näher dargestellt wurde. Rastfläche 15 am Rastkopf 12 und Haftfläche in der Rastaussparung 9 können dabei eine gerillte, geriffelte oder geprägte Oberfläche aufweisen. Zudem ist es möglich, dass an der Rastfläche 15 und an der Haftfläche eine Beschichtung vorgesehen ist.

Die Montage der Leuchte 1 wird erleichtert, wenn zwischen Vorsprung 4 und Aufnahme 7 eine elektrische Verbindung 25 vorgesehen ist, mit Hilfe der - parallel zum mechanischen Verbinden - über elektrische Kontakte 26.1, 26.2 am Montageteil 2 und elektrische Kontakte 27.1, 27.2 am Kupplungsteil 5 die elektrischen Baugruppen, beispielsweise die LED-Lampe 10, elektrisch versorgt werden können.

Eine hohe elektrische Sicherheit der Lampe 1 wird erreicht, indem ein erster elektrischer Kontakt 26.1 bzw. 26.2 in einer Öffnung 28 des Vorsprungs 4 und ein mit dem ersten elektrischen Kontakt 26.1 bzw. 26.2 verbindbarer zweiter elektrischer Kontakte 27.1 bzw. 27.2 in der Ausnehmung 6 am Kupplungsteil 5 vorgesehen sind.

## Patentansprüche

1. Leuchte mit einem zum Befestigen der Leuchte (1), beispielsweise an einer Gebäudestruktur (3), vorgesehenen Montageteil (2), das einen Vorsprung (4) aufweist, mit einem zum Tragen mindestens einer Lampe (10) vorgesehenen Kupplungsteil (5.1, 5.2), welches eine zum Einsetzen des Vorsprungs (4) ausgebildete Aufnahme (6) aufweist, und mit mindestens einer zwischen Vorsprung (4) und Aufnahme (6) vorgesehen, lösbaren Schnappverbindung (7), welcher eine Rastaussparung (9) am Außenmantel des Vorsprungs (4) sowie ein mit der Rastaussparung (9) verschnappbares Schnappelement (8.1, 8.2, 8.3, 8.4) zugehört, das am Kupplungsteil (5.1, 5.2) gelagert ist, **dadurch gekennzeichnet, dass** das Schnappelement (8.1, 8.2, 8.3, 8.4) einen am Kupplungsteil (5.1, 5.2) zumindest einseitig eingespannten Biegebalken (11) und einen am Biegebalken (11) vorgesehenen Rastkopf (12) aufweist, welcher Rastkopf (12) in die Aufnahme (6) einragt und mit der Rastaussparung (9) verschnappbar ausgebildet ist.

2. Leuchte nach Anspruch 1, **dadurch gekennzeichnet, dass** der Biegebalken (11) beidseitig im Kupplungsteil (5.1, 5.2) eingespannt ist.

3. Leuchte nach Anspruch 1 oder 2, **dadurch gekennzeichnet, dass** der Rastkopf (12) mittig am Biegebalken (11) vorgesehen ist.

4. Leuchte nach Anspruch 1, 2 oder 3, **dadurch gekennzeichnet, dass** der Rastkopf (12) eine zumindest abschnittsweise gekrümmte Rastfläche (15) aufweist.

5. Leuchte nach einem der Ansprüche 1 bis 4, **dadurch gekennzeichnet, dass** der Rastkopf (12) eine verzahnte Rastfläche (15) aufweist.

6. Leuchte nach einem der Ansprüche 1 bis 5, **dadurch gekennzeichnet, dass** mehrere Schnappelemente (8.1, 8.2 bzw. 8.3, 8.4) am Kupplungsteil (5.1, 5.2) gelagert sind, die sich in der Aufnahme (6) diametral gegenüberliegen.

7. Leuchte nach einem der Ansprüche 1 bis 6, **dadurch gekennzeichnet, dass** die Leuchte (1) ein in eine Arretierstellung (19) bewegbar ausgebildetes Arretiermittel (17) aufweist, welches das mit der Rastaussparung (9) verschnappte Schnappelement (8.1, 8.2, 8.3, 8.4) in Ausrastrichtung (23.1, 23.2, 23.3, 23.4) arretiert.

8. Leuchte nach Anspruch 7, **dadurch gekennzeichnet, dass** das Arretiermittel (17) im Kupplungsteil (5.1, 5.2) beweglich gelagert ist.

9. Leuchte nach Anspruch 8, **dadurch gekennzeichnet, dass** zwischen Arretiermittel (17) und Kupplungsteil (5.1, 5.2) eine Linear- oder Rundführung (20, 22) vorgesehen ist.

10. Leuchte nach einem der Ansprüche 7 bis 9, **dadurch gekennzeichnet, dass** das Arretiermittel (17) beim Arretieren des Schnappelements (8.1, 8.2) am Biegebalken (11) rückseitig zum Rastkopf (12) anliegt.

11. Leuchte nach einem der Ansprüche 7 bis 10, **dadurch gekennzeichnet, dass** das Arretiermittel (17) zwei diametral gegenüberliegende Schnappelemente (8.1, 8.2) in der jeweiligen Ausrastrichtung (23.1, 23.2, 23.3, 23.4) arretiert.

12. Leuchte nach einem der Ansprüche 1 bis 11, **dadurch gekennzeichnet, dass** der Vorsprung (4) im Bereich der Rastaussparung (9) rotationsymmetrisch ausgebildet ist.

13. Leuchte nach einem der Ansprüche 1 bis 12, **dadurch gekennzeichnet, dass** die Rastaussparung (9) eine Außenverzahnung (24) aufweist.

14. Leuchte nach einem der Ansprüche 1 bis 13, **dadurch gekennzeichnet, dass** zwischen Vorsprung (4) und Aufnahme (6) eine elektrische Verbindung über elektrische Kontakte am Montageteil (2) und Kupplungsteil (5.1, 5.2) vorgesehen ist.

15. Leuchte nach Anspruch 14, **dadurch gekennzeichnet, dass** ein erster elektrischer Kontakt (26.1 bzw. 26.2) in einer Öffnung des Vorsprungs (4) und ein mit dem ersten elektrischen Kontakt verbindbarer, zweiter elektrischer Kontakt (27.1 bzw. 27.2) in der Ausnehmung (6) am Kupplungsteil (5.1, 5.2) vorgesehen sind.
